# EUROPEAN PATENT SPECIFICATION

(11) **EP 4 366 048 B1**
(45) Date of publication and mention of the grant of the patent: **24.12.2025**
(21) Application number: 23737364.2
(22) Date of filing: 04.01.2023
(51) Int. Cl.: H01M 50/148, H01M 50/166, H01M 50/103, H01M 50/249, H01M 50/271, H01M 50/233, H01M 50/244, H01M 50/264

(54) **BATTERY PACK ASSEMBLY USING ROTATING HANDLE**
BATTERIEPACKANORDNUNG MIT DREHGRIFF
ENSEMBLE BLOC-BATTERIE UTILISANT UNE POIGNÉE ROTATIVE

(30) Priority: 04.01.2022 KR 20220000842
(43) Date of publication of application: 08.05.2024
(73) Proprietor: LG Energy Solution, Ltd., Seoul 07335 (KR)
(72) Inventor: KEUM, Jong Yoon, Daejeon 34122 (KR)
(74) Representative: Plasseraud IP
(86) International application number: PCT/KR2023/000132
(87) International publication number: WO 2023/132616

(56) References cited:
- JP-A- 2005 020 867
- JP-A- 2017 220 513
- JP-B2- 6 493 553
- JP-B2- 6 872 030
- KR-A- 20180 058 679
- KR-A- 20210 063 940
- US-A1- 2010 181 129
- US-A1- 2019 103 641
- US-B1- 6 641 432

## Description

### Technical Field

The present invention relates to a battery pack assembly, which relates to, particularly, a battery pack assembly having a fixing structure using a rotating handle and an elastic member.

### Background Art

Electric vehicles are driven by batteries, and among them, light electric vehicles (LEVs) include two-wheeled vehicles such as electric bicycles and electric scooters. The battery pack of the light electric vehicle may be a replaceable or swappable pack.

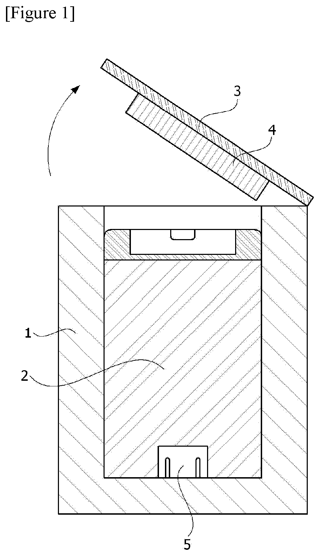

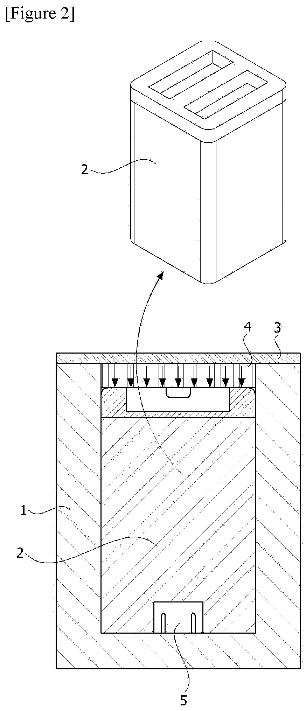

Figures 1 and 2 show a conventional battery pack assembly, where Figure 1 is in a state where the seat cover is opened, and Figure 2 is in a state in which the seat cover is closed.

Referring to Figures 1 and 2, a seat (LEV seat) (1) is mounted on a light electric vehicle, a battery pack (2) is mounted on the seat (1), a seat cover (3) is installed on the top of the seat (1), a foam (4) is attached to the lower surface of the seat cover (3), and a connector (5) is installed to the lower part of the battery pack (2).

Referring to Figure 2, the conventional pack fixing structure is a structure that as a pack fixing method using the compressive force of the foam (4) attached to the seat cover (3), when the seat cover (3) is closed, the foam (4) attached to the seat cover (3) compresses the battery pack (2) from above to be fixed. However, when used repeatedly for a long period of time, the foam (4) is permanently deformed by the compressive force, whereby the compressive force fixing the battery pack (2) may be reduced or weakened. If the force (compressive force) that fixes the pack is reduced or weakened due to compression of the foam, the connector (5) contacts may become weak or the connector (5) contact defects may occur, and the battery pack (2) may be damaged or broken by vibration and shock. JP6872030B2 discloses a battery attachment/detachment structure for saddle-type vehicles.

### Disclosure

### Technical Problem

It is an object of the present invention to provide a battery pack assembly capable of maintaining fixation force of the battery pack even when repeatedly used for a long period of time.

### Technical Solution

According to one aspect of the present invention, a battery pack assembly is provided, which comprises: a battery pack having a cover; a handle rotatably installed on the battery pack cover, and rotating between an unlock position where both ends of the handle are located inside the battery pack cover and a lock position where both ends of the handle protrude outward from the battery pack cover;
a seat having an inner space for accommodating a battery pack, provided such that both ends of the handle are inserted at the lock position, and having grooves for inserting both ends of the handle at the lock position; and an elastic member provided in the inner space of the seat and arranged to be compressed when the battery pack is inserted into the inner space.

Specifically, the battery pack assembly related to one example of the present invention may comprise: a battery pack having a cover on the top; a handle rotatably installed on the top surface of the battery pack cover, formed in a rod shape, and rotating between an unlock position where both ends are disposed within the top surface range of the battery pack cover and a lock position where both ends protrude beyond the top surface range of the battery pack cover; a seat having an inner space for accommodating the battery pack, and having grooves formed on the top of the inner side surface so that both ends of the handle are inserted at the lock position and fixed; and an elastic member installed between the inner bottom surface of the seat and the lower surface of the battery pack.

In the present invention, when the handle is pressed down in a state where the handle is at the unlock position, the handle may be lowered while the elastic member is compressed by the lowering of the battery pack, and when the handle is rotated to the lock position in a state where the handle is lowered to the groove position of the seat, the battery pack may be fixed to the seat while both ends of the handle are inserted into the grooves of the seat.

In the present invention, when the handle is rotated to the unlock position in a state where both ends of the handle are inserted into the grooves of the seat, the battery pack rises by the restoring force of the elastic member to be detachable from the seat while both ends of the handle escape from the grooves of the seat.

In the present invention, the groove position of the seat, and the elastic modulus and deformation amount of the elastic member may be set so that the elastic member may be compressed and expanded only within the elastic region.

In the present invention, locking jaws limiting the rotation range of the handle at each of the unlock position and the lock position of the handle may be formed on the battery pack cover.

In the present invention, the grooves of the seat may be continuously formed in the circumferential direction of the seat by at least the rotation range of the handle along the rotation direction of the handle.

The battery pack assembly according to the present invention may further comprises a cap installed at the rotation center of the handle to be capable of preventing rotation of the handle; and a second elastic member installed between the handle and the cap.

In the present invention, the cap may comprise an upper member; a rim member extending downward from the rim portion of the upper member; a pair of leg members extending downward from the upper member inside the rim member; and a protruding member extending outward in the lateral direction from the lower portion of the leg members.

In the present invention, the handle may comprise a second groove into which the rim member of the cap is inserted; a hole into which the leg members of the cap are inserted; a vertical member sandwiched between the pair of leg members of the cab; a supporting member extending outward in the lateral direction from the lower portion of the vertical member; and a third groove formed on the supporting member and into which the protruding member of the cap is inserted.

In the present invention, the battery pack cover may comprise a handle mounting member installed at the rotation center of the handle; wherein the handle mounting member may comprise a first accommodating part accommodating the supporting member of the handle; a second accommodating part accommodating the vertical member of the handle and the leg members of the cap; and a second locking jaw installed in the second accommodating part and limiting rotation of the protruding member of the cap.

In the present invention, in a state where the handle is at the unlock position, the protruding member of the cap is caught on the second locking jaw, so that the rotation of the handle can be prevented.

In the present invention, when the cap is pressed down in a state where the handle is at the unlock position, the protruding member of the cap escapes the second locking jaw and is inserted into the third groove of the handle while the second elastic member is compressed, so that the rotation of the handle is possible.

### Advantageous Effects

The battery pack assembly of the present invention can maintain, as a pack fixing method using the compressive force of an elastic member, fixation force of the battery pack even when repeatedly used for a long period of time.

Also, by adopting a method of fixing the battery pack using the rotating handle and the compressive force of the elastic member inside the seat, additional parts are not required.

In addition, by applying the cap structure to the handle, it is possible to prevent the handle from rotating in a state where the battery pack is separated from the seat.

### Description of Drawings

Figure 1 shows a conventional battery pack assembly, which shows a state where a seat cover is opened.
Figure 2 shows a conventional battery pack assembly, which shows a state where the seat cover is closed.
Figure 3 shows a battery pack assembly according to the present invention, which shows an unlocked state.
Figure 4 shows a battery pack assembly according to the present invention, which shows a locked state.
Figure 5 shows a battery pack, a handle, and a cap in an unlocked state according to the present invention, wherein the third diagram is a cross-sectional diagram along line A-A of the second diagram.
Figure 6 shows a battery pack, handle, and cap in a locked state according to the present invention, wherein the third diagram is a cross-sectional diagram along line B-B of the second diagram.
Figure 7 shows an anti-rotation structure by interference between a cap and a cover according to the present invention.

### Mode for Invention

Hereinafter, the present invention will be described in detail with reference to the accompanying drawings.

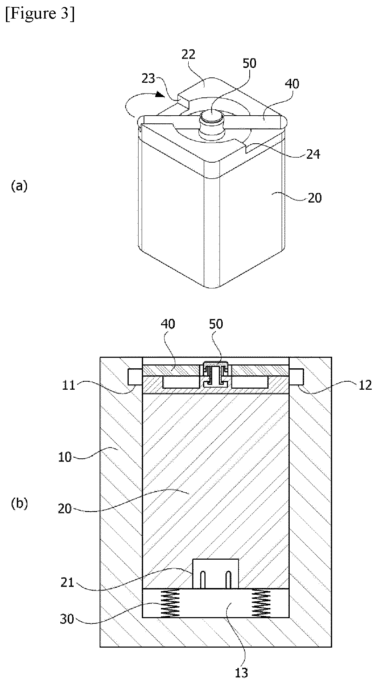

Figure 3 shows a battery pack assembly according to the present invention, which shows an unlocked state. Figure 3(a) is a perspective diagram of the battery pack assembly, and Figure 3(b) is a cross-sectional diagram of the battery pack assembly.

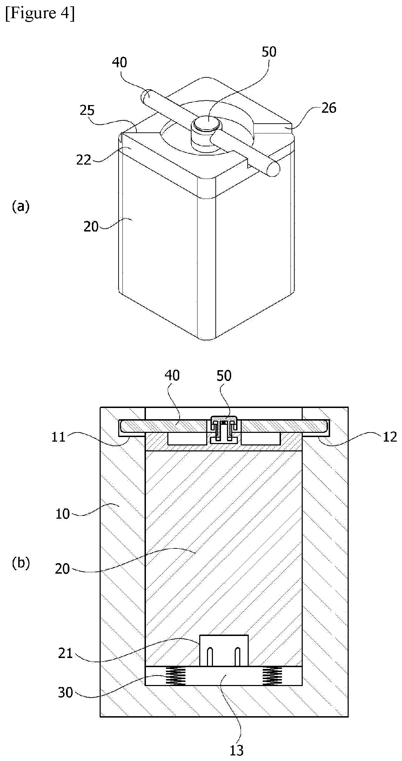

Figure 4 shows a battery pack assembly according to the present invention, which shows a locked state. Figure 4(a) is a perspective diagram of the battery pack assembly, and Figure 4(b) is a cross-sectional diagram of the battery pack assembly.

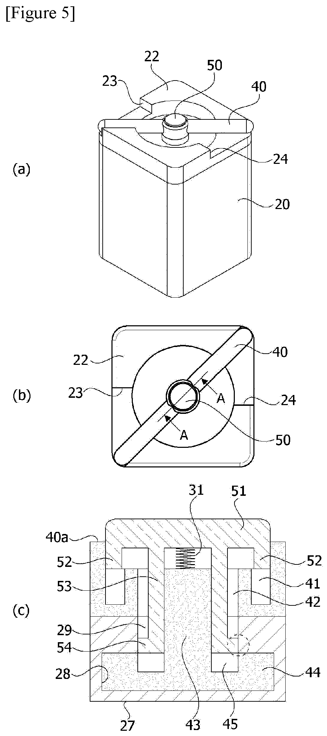

Figure 5 shows a battery pack, a handle, and a cap in an unlocked state according to the present invention. Figure 5(a) is a perspective diagram of the battery pack assembly, Figure 5(b) is a plan view of the battery pack assembly, and Figure 5(c) is a cross-sectional diagram along line A-A of Figure 5(b).

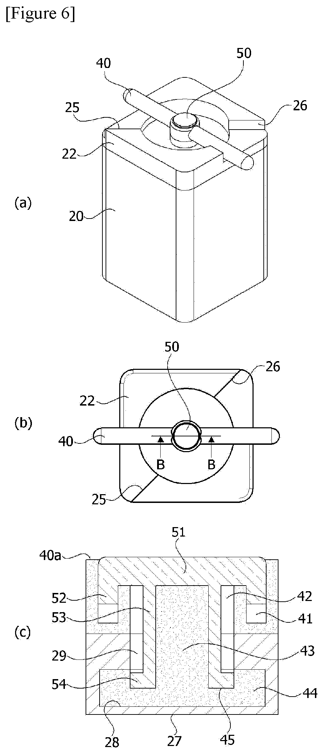

Figure 6 shows a battery pack, a handle, and a cap in a locked state according to the present invention. Figure 6(a) is a perspective diagram of the battery pack assembly, Figure 6(b) is a plan view of the battery pack assembly, and Figure 6(c) is a cross-sectional diagram along line B-B of Figure 6(b).

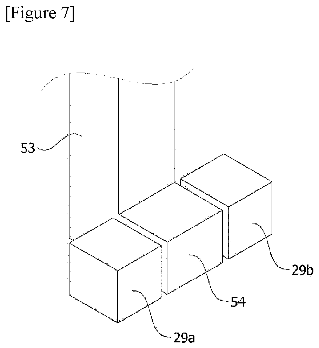

In addition, Figure 7 shows an anti-rotation structure by interference between a cap and a cover according to the present invention.

Referring to 3 to 7, the battery pack assembly according to the present invention may comprise a seat (10), first grooves (11, 12), a seat inner space (13), a battery pack (20), a connector (21), a battery pack cover (22), first locking jaws (23, 24, 25, 26), a handle mounting member (27), a first accommodating part (28), a second accommodating part (29), second locking jaws (29a, 29b), a first elastic member (30), a second elastic member (31), a handle (40), a handle body (40a), a second groove (41), a hole (42), a vertical member (43), a supporting member (44), a third groove (45), a cap (50), an upper member (51), a rim member (52), a leg member (53), and a protrusion member (54).

The seat (10) may be mounted on an electric vehicle, for example, a light electric vehicle (LEV). The seat (10) has an inner space (13) accommodating the battery pack (20), where the inner space (13) has a shape such as a hexahedron corresponding to the battery pack (20) and a size (volume) corresponding to the battery pack (20).

The first grooves (11, 12) may be formed on the upper part of the inner side surface of the seat (10); both ends of the handle (40) may be inserted and fixed into the first grooves (11, 12) at a lock position; and the first grooves (11, 12) may have a thickness corresponding to that of the handle (40). A total of two first grooves (11, 12) may be formed one by one on both inner side surface of the seat (10) facing each other, which may be formed by extending outward in the lateral direction from the inner side surface. The positions of the first grooves (11, 12), especially the positions in the height direction, may be appropriately set so that the first elastic member (30) may compress and expand (restore) only within the elastic region.

The first grooves (11, 12) may be continuously formed in the circumferential direction of the seat (10) by at least a rotation range (from an unlock position to a lock position) of the handle (40) along the rotation direction of the handle (40). Specifically, the first grooves (11, 12) start to just pass through the unlock position of the handle (40) and are formed to the lock position of the handle (40), provided that the width (lateral direction) of the first grooves (11, 12) may reach a maximum width at the lock position of the handle (40) while gradually increasing along the circumferential direction of the seat (10).

The battery pack (20) may have a shape of a polyhedron such as a hexahedron illustrated in the drawings, or an elliptical cylinder, and the like, where a plurality of batteries may be embedded therein, a connector (21) may be installed at the bottom, and a cover (22) may be provided on the top.

The handle (40) may be rotatably installed on the top surface of the battery pack cover (22). Here, the top surface may be interpreted as including all visible surfaces when the cover (22) is viewed from above. Specifically, it may be interpreted as including all the top surface of the protruding portion forming the first locking jaws (23, 24, 25, 26), the top surface of the rotation region in contact with the handle (40), and the top surfaces of the circular grooves in the form recessed at a predetermined radius from the center of the cover (22).

The top surface of the cover (22) may preferably be formed in a quadrangle (square, rectangle, diamond, etc.), as illustrated when viewed from above, but when both ends of the handle (40) can be disposed within the top surface range of the cover (22) at the unlock position, and both ends of the handle (40) can protrude out of the top surface range of the cover (22) at the lock position, the top surface shape of the cover (22) is not particularly limited, and for example, is also allowably a polygon or an ellipse, provided that in the case of a circular shape, it cannot be adopted because both ends of the handle (40) cannot protrude out of the top surface range.

In this document, the top surface range of the cover (22) means the inside of the cover (22) when the cover (22) is viewed from the top. That is, the meaning that both ends of the handle (40) are disposed within the top surface range of the cover (22) at the unlock position means that when the cover is viewed from the top at the unlock position, both ends of the handle (40) are located at the inside of the cover (22). In addition, the meaning that both ends of the handle (40) protrude out of the top surface range of the cover (22) at the lock position means that when the cover (22) is viewed from the top at the lock position, both ends of the handle (40) protrude to the outside of the cover (22) to be located.

The plurality of first locking jaws (23, 24, 25, 26) limiting the rotation range of the handle (40) at each of the unlock position and the lock position of the handle (40) may be formed on the top surface portion of the cover (22). A pair of locking jaws (23, 24) may restrict the handle (40) at the lock position, and another pair of locking jaws (25, 26) may restrict the handle (40) at the unlock position.

The first locking jaws (23, 24, 25, 26) may be formed by protruding a part of the top surface portions of the cover (22) upward to form protruding portions. As illustrated in the drawings, the protruding portions may be formed in two over a wide range, or may be formed in four over a narrow range, on both opposite corner sides.

In addition, as illustrated in the drawings, a circular groove recessed at a predetermined radius from the center of the cover (22) may be formed on the top surface portion of the cover (22). As the circular groove is formed, the handle (40) can be easily manipulated, and the handle (40) can rotate smoothly.

The regions other than the protruding portion and the circular groove may be a rotation region in which the handle (40) rotates while contacting the cover (22). In the height direction, the protruding portion is at the highest position, the rotation region is at the middle height, and the circular groove is at the lowest position. However, the constitution of the protruding portion, the circular groove, and the rotation region is not limited thereto, which may be appropriately changed as needed.

The first elastic member (30) may be installed between the inner bottom surface of the seat (10) and the lower surface of the battery pack (20), and may be fixed to at least any one or both two of the seat (10) and the battery pack (20), or may be installed without fixing. In the present invention, a pack fixing method using the compressive force of the first elastic member (30) is adopted. The elastic modulus and the deformation amount of the first elastic member (30) may be appropriately set so that the first elastic member (30) may be compressed and expanded (restored) only within the elastic region.

The handle (40) may be rotatably installed on the top surface of the battery pack cover (22), may be formed in a bar shape (circle, ellipse, polygon, etc. on a cross-sectional basis), and may rotate between the unlock position where both ends are disposed within the top surface range of the battery pack cover (22) and the lock position where both ends protrude (stick out) out of the top surface range of the battery pack cover (22).

The rotation angle of the handle (40) may be, for example, 10 to 90 degrees, preferably 20 to 70 degrees, more preferably 30 to 60 degrees, and most preferably 45±5 degrees. The length of the protruding portion of the handle (40) deviating from the top surface of the cover (22) may be, for example, 5 to 40%, preferably 10 to 30%, more preferably 15 to 25% based on the total length of the handle (40).

The rotation center of the handle (40) may be the center of the cover (22). As illustrated in the drawing, when the cover (22) is formed in a quadrangle, the unlock position of the handle (40) may lie on the diagonal of the quadrangle, and the lock position of the handle (40) may lie on the perpendicular bisector of two opposite sides of the quadrangle.

Looking at the fixing (locking) process of the battery pack (20), when the handle (40) is pressed down in a state where the handle (40) is at the unlock position, the handle (40) may be lowered while the first elastic member (30) is compressed by the lowering of the battery pack (20), and when the handle (40) is rotated to the lock position in a state where the handle (40) is lowered to the position of the first grooves (11, 12) of the seat (10), the battery pack (20) may be fixed to the seat (10) while both ends of the handle (40) are inserted into the first grooves (11, 12) of the seat (10).

Looking at the unfixing (unlocking, opening, releasing) process of the battery pack (20), when the handle (40) is rotated to the unlock position in a state where both ends of the handle (40) are inserted into the first grooves (11, 12) of the seat (10), the battery pack (20) may be lifted by the restoring force of the first elastic member (30) to be separated from the seat (10) while both ends of the handle (40) are out of the first grooves (11, 12) of the seat (10).

Referring to Figures 5 and 6, the battery pack assembly according to the present invention may further comprise a cap (50) installed at the rotation center of the handle (40) and capable of preventing the rotation of the handle (40); and a second elastic member (31) installed between the handle (40) and the cap (50).

The second elastic member (31) may be installed between the handle (40) and the cap (50), may be fixed to at least any one or both two of the handle (40) and the cap (50), or may be installed without fixing.

The cap (50) may be configured in an approximately Π-character shape wholly, and may comprise, specifically, an upper member (51); a rim member (52) extending downward from the rim portion of the upper member (51); a pair of leg members (53) extending downward from the upper member (51) in the inside of the rim member (52); and a protruding member (54) extending outward in the lateral direction from the lower portion of the leg members (53).

The upper member (51) may be composed of a disk or the like. The rim member (52) may be formed on all or only a part of the rim portion of the upper member (51), and may extend downward relatively shorter than the leg members (53). The leg members (53) may extend downward relatively longer than the rim member (52), and may be configured as a pair symmetrically based on the rotation center and at a predetermined interval from the rotation center. The protruding member (54) may extend shortly outward in the lateral direction from the lower portion of the respective leg members (53).

Referring to Figure 7, in order to prevent rotation of the handle (40), at least the movement of the protruding member (54) must be interfered by the handle mounting member (27) of the cover (22), and to this end, the leg members (53) and the protruding member (54) must be formed only partially along the circumferential direction of the cap (50) in the rotation direction of the handle (40).

The handle (40) may comprise a second groove (41) into which the rim member (52) of the cap (50) is inserted; a hole (42) into which the leg members (53) of the cap (50) are inserted; a vertical member (43) sandwiched between the pair of leg members (53) of the cap (50); a supporting member (44) extending outward in the lateral direction from the lower portion of the vertical member (43); and a third groove (45) formed on the supporting member (44) and into which the protruding member (54) of the cap (50) is inserted.

The second groove (41) may be formed in the vertical direction from the top to the bottom of the handle body (40a), may have the position, shape and size corresponding to those of the rim member (52), and may be formed longer than the rim member (52).

The hole (42) may be formed by penetrating the handle body (40a) from the inside of the second groove (41) in the vertical direction from the top to the bottom so that the leg members (53) and the protruding member (54) may penetrate to enter the supporting member (44). The hole (42) may have the position, shape, and size corresponding to those of the leg members (53) and the protruding member (54).

The vertical member (43) connects the handle body (40a) and the supporting member (44), serves to fix the leg members (53), and serves as a rotating shaft as well. The vertical member (43) has the same width as the spacing between the pair of leg members (53), so that the pair of leg members (53) may fit into the vertical member (43).

The supporting member (44) allows mounting the handle (40) to the handle mounting member (27) of the cover (22), serves to substantially support the entire handle (40), and serves as a rotating shaft as well. The supporting member (44) may have a wider width than the vertical member (43) within the width range of the handle mounting member (27).

The third groove (45) may be formed above the supporting member (44) and may have the position, shape, and size corresponding to those of the pair of protruding members (54).

The battery pack cover (22) may comprise a handle mounting member (27) installed at the rotation center of the handle (40). In addition, the handle mounting member (27) may comprise a first accommodating part (28) for accommodating the supporting member (44) of the handle (40), a second accommodating part (29) for accommodating the vertical member (43) of the handle (40) and the leg members (53) of the cap (50), and second locking jaws (29a, 29b) installed in the second accommodating part (29) and limiting rotation of the protruding member (54) of the cap (50).

The handle mounting member (27) may serve to rotatably support the handle (40), may protrude from the top surface portion of the cover (22) at the rotation center of the handle (40) to be formed, and may be formed in a cylindrical shape or the like.

The first accommodating part (28) is a space with a relatively large volume accommodating the supporting member (44) of the handle (40). The second accommodating part (29) is opened upward, is a space with a relatively large volume accommodating the vertical member (43) of the handle (40), and the leg members (53) and the protruding member (54) of the cap (50), and has a smaller width than that of the first accommodating part (28). The second accommodating part (29) may be continuously formed in the circumferential direction of the handle mounting member (27) by at least the rotation range of the handle (40) along the rotation direction of the handle (40).

The second locking jaws (29a, 29b) may be installed in the second accommodating part (29), for example, directly above the third groove (45) of the handle (40), and for example, as illustrated in Figure 7, they may be configured of one pair for each protruding member (54), a total of two pairs. However, the position and number, and shape and size of the second locking jaws (29a, 29b) may be appropriately changed as needed.

Figures 5 and 7 show an anti-rotation structure by interference between the cap (50) and the cover (22), wherein in a state where the handle (40) is at the unlock position, the protruding member (54) of the cap (50) is caught on the second locking jaws (29a, 29b) of the handle mounting member (27) of the cover (22), so that the rotation of the handle (40) can be prevented. When the cap (50) is not pressed, the cap (50) is always placed in this interference state.

Referring to Figure 6, when the cap (50) is pressed down in a state where the handle (40) is at the unlock position, the protruding member (54) of the cap (50) goes down while the second elastic member (31) is compressed, and thus escapes the second locking jaws (29a, 29b) and is inserted into the third groove (45) of the handle (40), so that the handle (40) can be rotated.

In this way, it has a structure that when the cap (50) is pressed, the handle (40) is rotatable, and specifically, when the cap (50) is pressed, the battery pack (20) is also pressed and simultaneously the handle (40) is also rotatable.

When the battery pack (20) is fixed to the first grooves (11, 12) of the seat (10), and then the pressed cap (50) is released, the state of Figure 5 can be restored while the cap (50) goes up by the restoring force of the second elastic member (31).

As described above, the fixing structure according to the present invention has the rotating handle, the elastic member on the bottom surface of the seat, and the grooves of the seat inside, into which the rotating handle can be inserted, as essential components, where the cap structure for preventing the handle from rotating when the battery pack has been separated may be optionally applied.

By applying the pack fixing method using the compressive force in the elastic region of the elastic member on the bottom surface of the seat, and specifically, applying the structure that the rotatable handle of the battery pack is inserted into the grooves at the top end of the seat and compresses the elastic member at the bottom end of the seat to fix the battery pack, the compressive force within the elastic region of the elastic member is used even if used for a long time, so that the present invention can maintain the compressive force for fixing the battery pack constant, and also prevent connector contact defects and damage to the pack due to vibration/shock.

Also, in the present invention, the compressive force for fixing the battery pack can be maintained even when repeatedly used for a long period of time by considering the elastic modulus and the deformation amount so that the elastic member at the bottom end of the seat can be compressed/expanded only within the elastic region.

### Industrial Applicability

The battery pack assembly of the present invention can maintain the fixing force of the battery pack even when repeatedly used for a long period of time as the pack fixing method using the compressive force of the elastic member.

## Claims

1. A battery pack assembly comprising:
a battery pack (20) having a cover (22);
a handle (40) rotatably installed on the battery pack cover, and rotating between an unlock position where both ends of the handle are located inside the battery pack cover and a lock position where both ends of the handle protrude outward from the battery pack cover;
a seat (10) having an inner space (13) for accommodating a battery pack, provided such that both ends of the handle are inserted at the lock position, and having grooves (11, 12) for inserting both ends of the handle at the lock position; and
an elastic member (30) provided in the inner space of the seat and arranged to be compressed when the battery pack is inserted into the inner space.

2. The battery pack assembly according to claim 1, wherein
when the handle is pressed down in a state where the handle is at the unlock position, the handle is lowered while the elastic member is compressed by the lowering of the battery pack, and
when the handle is rotated to the lock position in a state where the handle is lowered to the groove position of the seat, the battery pack is fixed to the seat while both ends of the handle are inserted into the grooves of the seat.

3. The battery pack assembly according to claim 1, wherein
the groove position of the seat, and the elastic modulus and deformation amount of the elastic member are set so that the elastic member may be compressed and expanded only within the elastic region.

4. The battery pack assembly according to claim 1, wherein
locking jaws (23, 24, 25, 26) limiting the rotation range of the handle at each of the unlock position and the lock position of the handle are formed on the battery pack cover.

5. The battery pack assembly according to claim 1, wherein
the grooves of the seat are continuously formed in the circumferential direction of the seat by at least the rotation range of the handle along the rotation direction of the handle.

6. The battery pack assembly according to claim 1, further comprising:
a cap (50) installed at the rotation center of the handle to be capable of preventing rotation of the handle; and
a second elastic member (31) installed between the handle and the cap.

7. The battery pack assembly according to claim 6, wherein
the cap comprises: an upper member (51); a rim member (52) extending downward from the rim portion of the upper member; a pair of leg members (53) extending downward from the upper member inside the rim member; and a protruding member (54) extending outward in the lateral direction from the lower portion of the leg members.

8. The battery pack assembly according to claim 7, wherein
the handle comprises: a second groove (41) into which the rim member of the cap is inserted; a hole (42) into which the leg members of the cap are inserted; a vertical member (43) sandwiched between the pair of leg members of the cab; a supporting member (44) extending outward in the lateral direction from the lower portion of the vertical member; and a third groove (45) formed on the supporting member and into which the protruding member of the cap is inserted.

9. The battery pack assembly according to claim 8, wherein
the battery pack cover comprises a handle mounting member (27) installed at the rotation center of the handle; wherein
the handle mounting member comprises: a first accommodating part (28) accommodating the supporting member of the handle; a second accommodating part (29) accommodating the vertical member of the handle and the leg members of the cap; and a second locking jaw (29a, 29b) installed in the second accommodating part and limiting rotation of the protruding member of the cap.

10. The battery pack assembly according to claim 9, wherein
in a state where the handle is at the unlock position, the protruding member of the cap is caught on the second locking jaw, so that the rotation of the handle is prevented.

11. The battery pack assembly according to claim 9, wherein
when the cap is pressed down in a state where the handle is at the unlock position, the protruding member of the cap escapes the second locking jaw and is inserted into the third groove of the handle while the second elastic member is compressed, so that the rotation of the handle is possible.

## Patentansprüche

1. Batteriepackanordnung, umfassend:
einen Batteriepack (20), welcher eine Abdeckung (22) aufweist;
einen Griff (40), welcher rotierbar an der Abdeckung des Batteriepacks installiert ist und zwischen einer entsperrten Position, wo beide Enden des Griffs innerhalb der Abdeckung des Batteriepacks angeordnet sind, und einer versperrten Position rotiert, wo beide Enden des Griffs von der Abdeckung des Batteriepacks nach außen hervorstehen;
einen Sitz (10), welcher einen Innenraum (13) zum Fassen eines Batteriepacks aufweist, welcher derart bereitgestellt ist, dass beide Enden des Griffs an der versperrten Position eingesetzt sind, und welcher Kerben (11, 12) zum Einsetzen beider Enden des Griffs an der gesperrten Position aufweist; und
ein elastisches Element (30), welches in dem Innenraum des Sitzes bereitgestellt und angeordnet ist, um komprimiert zu sein, wenn der Batteriepack in den Innenraum eingesetzt ist.

2. Batteriepackanordnung nach Anspruch 1, wobei
wenn der Griff nach unten gedrückt ist in einem Zustand, in welchem der Griff sich an der entsperrten Position befindet, der Griff abgesenkt ist, während das elastische Element durch das Absenken des Batteriepacks komprimiert ist, und wenn der Griff zu der versperrten Position rotiert ist in einem Zustand, in welchem der Griff zu der Position der Kerbe des Sitzes abgesenkt ist, der Batteriepack an dem Sitz fixiert ist, während beide Enden des Griffs in die Kerben des Sitzes eingesetzt sind.

3. Batteriepackanordnung nach Anspruch 1, wobei
die Position der Kerbe des Sitzes und das Elastizitätsmodul sowie die Deformationsmenge des elastischen Elements eingestellt sind, sodass das elastische Element nur innerhalb des elastischen Bereichs komprimiert und ausgedehnt werden kann.

4. Batteriepackanordnung nach Anspruch 1, wobei
Sperrbacken (23, 24, 25, 26), welche den Rotationsumfang des Griffs an jeder von der entsperrten Position und der versperrten Position des Griffs begrenzen, auf der Abdeckung des Batteriepacks gebildet sind.

5. Batteriepackanordnung nach Anspruch 1, wobei
die Kerben des Sitzes kontinuierlich in der Umfangsrichtung des Sitzes über wenigstens den Rotationsumfang des Griffs entlang der Rotationsrichtung des Griffs gebildet sind.

6. Batteriepackanordnung nach Anspruch 1, ferner umfassend:
eine Kappe (50), welche an dem Rotationszentrum des Griffs installiert ist, um dazu in der Lage zu sein, eine Rotation des Griffs zu unterbinden; und
ein zweites elastisches Element (31), welches zwischen dem Griff und der Kappe installiert ist.

7. Batteriepackanordnung nach Anspruch 6, wobei
die Kappe umfasst: ein oberes Element (51); ein Randelement (52), welches sich von dem Randabschnitt des oberen Elements nach unten erstreckt; ein Paar Beinelemente (53), welche sich von dem oberen Element innerhalb des Randelements nach unten erstrecken; und ein hervorstehendes Element (54), welches sich in der lateralen Richtung von dem unteren Abschnitt der Beinelemente nach außen erstreckt.

8. Batteriepackanordnung nach Anspruch 7, wobei
der Griff umfasst: eine zweite Kerbe (41), in welche das Randelement der Kappe eingesetzt ist; ein Loch (42), in welches die Beinelemente der Kappe eingesetzt sind; ein vertikales Element (43), welches zwischen dem Paar von Beinelementen der Kappe eingeschoben ist; ein Halterungselement (44),
welches sich in der lateralen Richtung von dem unteren Abschnitt des vertikalen Elements nach außen erstreckt; und eine dritte Kerbe (45), welche an dem Halterungselement gebildet ist, und in welche das hervorstehende Element der Kappe eingesetzt ist.

9. Batteriepackanordnung nach Anspruch 8, wobei
die Abdeckung des Batteriepacks ein Griffmontageelement (27) umfasst, welches an dem Rotationszentrum des Griffs installiert ist; wobei
das Griffmontageelement umfasst: einen ersten Fassungsteil (28), welcher das Halterungselement des Griffs fasst; einen zweiten Fassungsteil (29), welcher das vertikale Element des Griffs und die Beinelemente der Kappe fasst; und eine zweite Sperrbacke (29a, 29b), welche in dem zweiten Fassungsteil installiert ist und eine Rotation des hervorstehenden Elements der Kappe limitiert.

10. Batteriepackanordnung nach Anspruch 9, wobei
in einem Zustand, in welchem sich der Griff an der entsperrten Position befindet, das hervorstehende Element der Kappe an der zweiten Sperrbacke aufgefangen ist, sodass die Rotation des Griffs unterbunden ist.

11. Batteriepackanordnung nach Anspruch 9, wobei
wenn die Kappe nach unten gedrückt ist in einem Zustand, in welchem sich der Griff an der entsperrten Position befindet, das hervorstehende Element der Kappe der zweiten Sperrbacke entkommt und in die dritte Kerbe des Griffs eingesetzt ist, während das zweite elastische Element komprimiert ist, sodass die Rotation des Griffs möglich ist.

## Revendications

1. Ensemble bloc-batterie comprenant :
un bloc-batterie (20) présentant un couvercle (22) ;
une poignée (40) installée de manière rotative sur le couvercle de bloc-batterie et tournant entre une position de déverrouillage où les deux extrémités de la poignée se trouvent à l'intérieur du couvercle de bloc-batterie et une position de verrouillage où les deux extrémités de la poignée font saillie vers l'extérieur à partir du couvercle de bloc-batterie ;
un siège (10) présentant un espace intérieur (13) pour loger un bloc-batterie, disposé de sorte que les deux extrémités de la poignée soient insérées dans la position de verrouillage, et présentant des rainures (11, 12) pour insérer les deux extrémités de la poignée dans la position de verrouillage ; et
un élément élastique (30) disposé dans l'espace intérieur du siège et agencé pour être comprimé lorsque le bloc-batterie est inséré l'espace intérieur.

2. Ensemble bloc-batterie selon la revendication 1, dans lequel
lorsque la poignée est enfoncée dans un état où la poignée est en position de déverrouillage, la poignée est abaissée tandis que l'élément élastique est comprimé par l'abaissement du bloc-batterie, et
lorsque la poignée est tournée jusqu'à la position de verrouillage dans un état où la poignée est abaissée jusqu'à la position de rainure du siège, le bloc-batterie est fixé au siège tandis que les deux extrémités de la poignée sont insérées dans les rainures du siège.

3. Ensemble bloc-batterie selon la revendication 1, dans lequel
la position de rainure du siège, et le module élastique et le degré de déformation de l'élément élastique sont réglés de sorte que l'élément élastique ne puisse être comprimé et dilaté que dans la région élastique.

4. Ensemble bloc-batterie selon la revendication 1, dans lequel
des mâchoires de verrouillage (23, 24, 25, 26) limitant l'amplitude de rotation de la poignée à chacune de la position de déverrouillage et de la position de verrouillage de la poignée sont formées sur le couvercle de bloc-batterie.

5. Ensemble bloc-batterie selon la revendication 1, dans lequel
les rainures du siège sont formées de manière continue dans la direction circonférentielle du siège par au moins la plage de rotation de la poignée le long de la direction de rotation de la poignée.

6. Ensemble bloc-batterie selon la revendication 1, comprenant en outre :
un capuchon (50) installé au niveau du centre de rotation de la poignée pour pouvoir empêcher la rotation de la poignée ; et
un deuxième élément élastique (31) installé entre la poignée et le capuchon.

7. Ensemble bloc-batterie selon la revendication 6, dans lequel
le capuchon comprend : un élément supérieur (51) ; un élément de rebord (52) s'étendant vers le bas à partir de la partie de rebord de l'élément supérieur ; une paire d'éléments pattes (53) s'étendant vers le bas à partir de l'élément supérieur à l'intérieur de l'élément de rebord ; et un élément saillant (54) s'étendant vers l'extérieur dans la direction latérale à partir de la partie inférieure des éléments pattes.

8. Ensemble bloc-batterie selon la revendication 7, dans lequel
la poignée comprend : une deuxième rainure (41) dans laquelle est inséré l'élément de rebord du capuchon ; un trou (42) dans lequel sont insérés les éléments pattes du capuchon ; un élément vertical (43) pris en sandwich entre la paire d'éléments pattes du capuchon ; un élément de support (44) s'étendant vers l'extérieur dans la direction latérale à partir de la partie inférieure de l'élément vertical, et une troisième rainure (45) formée sur l'élément de support et dans laquelle est inséré l'élément saillant du capuchon.

9. Ensemble bloc-batterie selon la revendication 8, dans lequel
le couvercle de bloc-batterie comprend un élément de montage de poignée (27) installé au niveau du centre de rotation de la poignée ; dans lequel
l'élément de montage de poignée comprend : une première partie de logement (28) logeant l'élément de support de la poignée ; une deuxième partie de logement (29) logeant l'élément vertical de la poignée et les éléments pattes du capuchon ; et une deuxième mâchoire de verrouillage (29a, 29b) installée dans la deuxième partie de logement et limitant la rotation de l'élément saillant du capuchon.

10. Ensemble bloc-batterie selon la revendication 9, dans lequel
dans un état où la poignée est en position de déverrouillage, l'élément saillant du capuchon est pris dans la deuxième mâchoire de verrouillage, de sorte que la rotation de la poignée est empêchée.

11. Ensemble bloc-batterie selon la revendication 9, dans lequel
lorsque le capuchon est enfoncé dans un état où la poignée est en position de déverrouillage, l'élément saillant du capuchon s'échappe de la deuxième mâchoire de verrouillage et s'insère dans la troisième rainure de la poignée, tandis que le deuxième élément élastique est comprimé, de sorte que la rotation de la poignée est possible.
